# EUROPEAN PATENT APPLICATION

(11) **EP 3 663 672 A1**
(43) Date of publication of application: **10.06.2020**
(21) Application number: 18910644.6
(22) Date of filing: 19.07.2018
(51) Int. Cl.: F25B 1/00, F04B 39/06, F22B 3/02, F24H 4/02, F25B 30/02

(54) **STEAM-GENERATING HEAT PUMP DEVICE**

(30) Priority: 19.03.2018 JP 2018051680
(71) Applicant: Fuji Electric Co., Ltd., Kawasaki-shi, Kanagawa 210-9530 (JP)
(72) Inventor: GOTO, Mikio, Kawasaki-shi, Kanagawa 210-9530 (JP); ONO, Tomohito, Kawasaki-shi, Kanagawa 210-9530 (JP); ODA, Yoshinari, Kawasaki-shi, Kanagawa 210-9530 (JP); ONISHI, Yusuke, Kawasaki-shi, Kanagawa 210-9530 (JP); YOKOYAMA, Yasuhiro, Kawasaki-shi, Kanagawa 210-9530 (JP)
(74) Representative: Appelt, Christian W.
(86) International application number: PCT/JP2018/027197
(87) International publication number: WO 2019/180982

(57) **Abstract**

It is an object to provide a steam generation heat pump system that allows heat released from a heat exchanger, provided to adjust the temperature of oil in a compressor, to be effectively recycled in the system. The steam generation heat pump system includes a housing accommodating the steam generation heat pump system, an intake port disposed on a side surface of the housing, closer to the bottom of the housing, an exhaust port disposed on a side surface of the housing, closer to the top of the housing, an oil heat exchanger disposed outside the body of the compressor and configured to cool oil of the compressor through an oil circulation pipe connected to the compressor and an oil pump, and an intake fan provided to the intake port and configured to take in outside air and to send the drawn outside air toward the oil heat exchanger.

## Description

### Field

The present invention relates to a steam generation heat pump system that allows heat exhausted from a heat exchanger, provided to adjust the temperature of oil in a compressor, to be effectively recycled in the system. Background

As a steam generation heat pump system (device), there is a steam generator that uses a heat pump device. Such a steam generation heat pump system recovers heat from waste hot water (hot water), such as waste water from factories and used coolant, and generates steam. That is, the steam generation heat pump system has an evaporator of the heat pump system functioning as an exhaust heat recovery unit. The evaporator recovers exhaust heat of waste hot water into a refrigerant, and a condenser generates steam by heating water to be heated using the recovered heat. This system is advantageous in reducing the running cost and CO₂ emission compared to combustion powered steam generators that generate steam using boilers and other equipment.

For example, Patent Document 1 describes a configuration of a steam generation heat pump system that stores hot water as a heat source in a heat source water tank (hot water tank) and supplies the water in this tank to an exhaust heat recovery unit.

### Citation List

### Patent Document

Patent Document 1: Japanese Laid-open Patent Application No. 2013-210118

### Summary

### Problem to be solved by the Invention

A steam generation heat pump system uses a compressor to compress refrigerant. To enhance the reliability of the compressor, lubricating oil is required to be used to reduce abrasion of the compressor.

Viscosity of the oil is reduced at high temperatures, which results in breakage of the oil film and promotes abrasion. Viscosity is, however, increased with a decrease in the temperature of the oil, which causes insufficient circulation of the oil. Since the oil cannot be delivered to entire portion of the compressor, abrasion of the compressor is likely to occur. A heat exchanger is therefore to be provided to adjust the temperature of oil in the compressor. For example, when oil of the compressor is cooled by the heat exchanger, heat generated in heat exchange is released to the outside air. The heat released to the outside air reduces the efficiency of operation of the steam generation heat pump system.

From the above point of view, it is an object of the present invention to provide a steam generation heat pump system that allows heat released from a heat exchanger, which is provided to adjust the temperature of oil in a compressor, to be effectively recycled in the system.

### Means for solving the Problem

To resolve the above problem and attain the object, a steam generation heat pump system according to the present invention is provided, that recovers heat from heat-source hot water to refrigerant through an evaporator using a heat pump, compresses the refrigerant with a compressor, generates steam by transferring heat from the compressed refrigerant to water to be heated through a condenser, and supplies generated steam to a steam-use facility. The steam generation heat pump system includes: a housing accommodating the steam generation heat pump system; an intake port disposed, on a side surface of the housing, closer to a bottom of the housing; an exhaust port disposed, on a side surface of the housing, closer to a top of the housing; an oil heat exchanger disposed outside a body of the compressor and configured to cool oil of the compressor through an oil circulation pipe connected to the compressor and an oil pump; and an intake fan provided to the intake port and configured to take in outside air and send the drawn outside air toward the oil heat exchanger.

Further, the steam generation heat pump system according to the present invention further includes: a temperature sensor provided to the oil circulation pipe; and an intake fan control unit configured to control an amount of air sent from the intake fan. Further, the intake fan control unit increases the amount of air from the intake fan when a temperature detected by the temperature sensor is equal to or greater than a predetermined value.

Further, in the above steam generation heat pump system according to the present invention, the temperature sensor is provided to an oil returning pipe, of the oil circulation pipe, to return oil from the oil heat exchanger to the body of the compressor.

Further, in the above steam generation heat pump system according to the present invention, each of an oil feeding pipe and the oil returning pipe of the oil circulation pipe is bent at least in directions of three axes and has a U-shaped curved portion.

Further, in the above steam generation heat pump system according to the present invention, the body of the compressor is disposed such that a fluid surface of an oil reservoir is located below a lowest level of the oil heat exchanger.

Further, in the above steam generation heat pump system according to the present invention, an upward-facing hood to send air toward a gas-liquid separator is disposed close to an outlet of the intake fan.

Further, in the above steam generation heat pump system according to the present invention, an intake port is formed on the housing, at a location corresponding to a location of a drive motor that drives the compressor.

### Effect of the Invention

According to the present invention, it is possible to effectively use the heat within the system, the heat being exhausted from a heat exchanger, and enhance the efficiency of the system even when the heat exchanger is provided, which is for adjusting the temperature of the oil of the compressor.

### Brief Description of the Drawings

FIG. 1 is a block diagram illustrating a configuration of a steam generation heat pump system according to a first embodiment of the present invention.
FIG. 2 is a perspective view illustrating a layout configuration in the steam generation heat pump system of FIG. 1.
FIG. 3 is a sectional view of the steam generation heat pump system of FIG. 1 when viewed from the left side thereof.
FIG. 4 is a drawing illustrating a shape of an oil circulation pipe.
FIG. 5 is a drawing illustrating relative relationship of locations between a compressor oil fluid surface of an oil reservoir in a compressor body and an oil heat exchanger.
FIG. 6 is an exploded perspective view illustrating relative locations between an oil heat exchanger, an intake fan, and an upward-facing hood in assembly and disassembly processes.
FIG. 7 is a perspective view illustrating a layout configuration in a steam generation heat pump system according to a second embodiment of the present invention.
FIG. 8 is a sectional view of the steam generation heat pump system of FIG. 7 when viewed from the left side thereof.
FIG. 9 is a perspective view of the steam generation heat pump system of FIG. 7 when viewed diagonally from the front of the system.
FIG. 10 is a perspective view of the steam generation heat pump system of FIG. 7 when viewed diagonally from the back of the system.

### Description of Embodiments

Embodiments of the present invention will now be described with reference to the accompanying drawings.

### First Embodiment

### Overall Configuration

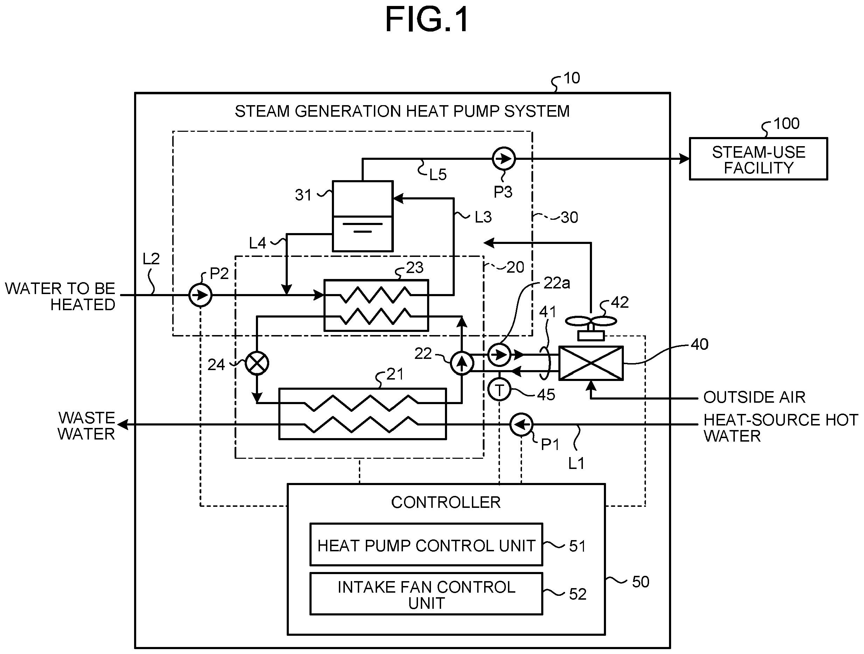

FIG. 1 is a block diagram illustrating a configuration of a steam generation heat pump system 10 according to a first embodiment of the present invention. The steam generation heat pump system 10 is a system that recovers heat from heat-source hot water and generates water vapor using the recovered heat. The generated water vapor is delivered to an external steam-use facility 100.

As illustrated in FIG. 1, the steam generation heat pump system 10 includes a heat pump 20 that supplies a heat source to generate steam, a gas-liquid separator 31 that is used in a steam generation process, an oil heat exchanger 40 that adjusts the temperature of oil in an compressor 22 of the heat pump 20, and a controller 50.

The heat pump 20 is a refrigeration cycle mechanism including an evaporator 21 that recovers heat from a heat-source hot water and heats a refrigerant, the compressor 22 that compresses the refrigerant heated by the evaporator 21, a condenser 23 that draws heat away from the refrigerant compressed by the compressor 22 and condenses the refrigerant, and a throttle expander 24 that expands the refrigerant output from the condenser 23. In the heat pump 20, these components are circularly sequentially connected with one another by a refrigerant pipe to circulate the refrigerant therethrough.

The refrigerant is compressed by the compressor 22 into a high-temperature high-pressure refrigerant. The condenser 23 transfers heat between the refrigerant and water to be heated, supplied through a to-be-heated water supply line L2 and a to-be-heated water supply pump P2 and circulating through steam circulation lines (steam circulation pipes) L3 and L4 having a gas-liquid separator 31 disposed therebetween. The refrigerant with heat transferred therefrom is cooled and condensed in the condenser 23. The refrigerant output from the condenser 23 is throttled and expanded by the throttle expander 24, which is an electronic expansion valve, and evaporates at the evaporator 21 by absorbing heat from heat-source hot water supplied through a heat-source hot water supply line L1 and a heat-source hot water supply pump P1, and returns to the compressor 22.

The gas-liquid separator 31 is a cylindrical container extended along the vertical direction. The gas-liquid separator 31 is fed with water to be heated through the to-be-heated water supply line L2 connected to the steam circulation line L4, connected to the bottom wall of the container, and stores the water inside the container. The water to be heated from the to-be-heated water supply line L2 may be hot water or water from a water source (not illustrated) such as a water pipe and a water tank.

The gas-liquid separator 31 has its upper end wall connected with a steam outlet line L5, which sends out the generated water vapor toward the external steam-use facility 100. A two-phase flow composed of water and water vapor is sent out from the condenser 23 and introduced into the gas-liquid separator 31 through the steam circulation line L3 connected to the outlet of the condenser 23. Water vapor having water separated by the gas-liquid separator 31 is sent to the steam outlet line L5.

The steam sent to the steam outlet line L5 is compressed by a steam compressor P3 that increases the pressure of the steam. The steam having an increased pressure is sent out toward the steam-use facility 100. The steam supplied through the steam outlet line L5 has a temperature of, for example, 120 degrees Celsius. The condenser 23, the gas-liquid separator 31, the steam circulation lines L3 and L4, the steam outlet line L5, and the steam compressor P3 are components of a steam generator 30.

The oil heat exchanger 40 causes a part of oil inside the compressor 22 to circulate through an oil circulation pipe 41 and exchanges heat between the circulating oil and outside air taken in by an intake fan 42 configured to take in outside air. The oil heat exchanger 40 is disposed on the bottom of the system housing. The outside air with heat transferred thereto in heat exchange is sent toward the steam circulation pipe L3, disposed closer to the top of the system housing, by the intake fan 42 and maintains the gas-liquid two-phase flow inside the steam circulation pipe L3 at high temperatures in an attempt to prevent the level of dryness of the steam from being lowered. An oil returning pipe, of the oil circulation pipe 41, to return oil from the oil heat exchanger 40 to the body of the compressor 22 is provided with a temperature sensor 45. The oil heat exchanger 40 adjusts the temperature of oil mainly to cool the oil.

The controller 50 is connected with the heat pump 20, the heat-source hot water supply pump P1, the to-be-heated water supply pump P2, the temperature sensor 45, and the intake fan 42. The controller 50 includes a heat pump control unit 51 and an intake fan control unit 52.

The heat pump control unit 51 is operated in overheat control, in which, for example, during normal operation, the number of revolutions of drive of the compressor 22 and the opening of the throttle expander 24 such that the refrigerant being compressed is heated to a predetermined overheat temperature. The overheat control is conducted based on, for example, values (the inlet pressure, the inlet temperature, the outlet pressure, and the outlet temperature) detected by a pressure sensor and a temperature sensor (not illustrated) provided on either one or both of the inlet and the outlet of the compressor 22. The heat pump control unit 51 conducts output control based on the temperature of heat-source hot water.

When the temperature detected by the temperature sensor 45 is higher than a predetermined value, the intake fan control unit 52 provides a control to increase the amount of air drawn by the intake fan 42 to increase the amount of heat to be transferred in heat exchange. This control may be conducted using a plurality of intake fans 42. When the temperature detected by the temperature sensor 45 is higher than a predetermined value, an increased number of fans may be operated to increase the amount of intake air. In the case of using a single fan, the number of rotations of the fan may be increased by inverter control.

### Layout of Components

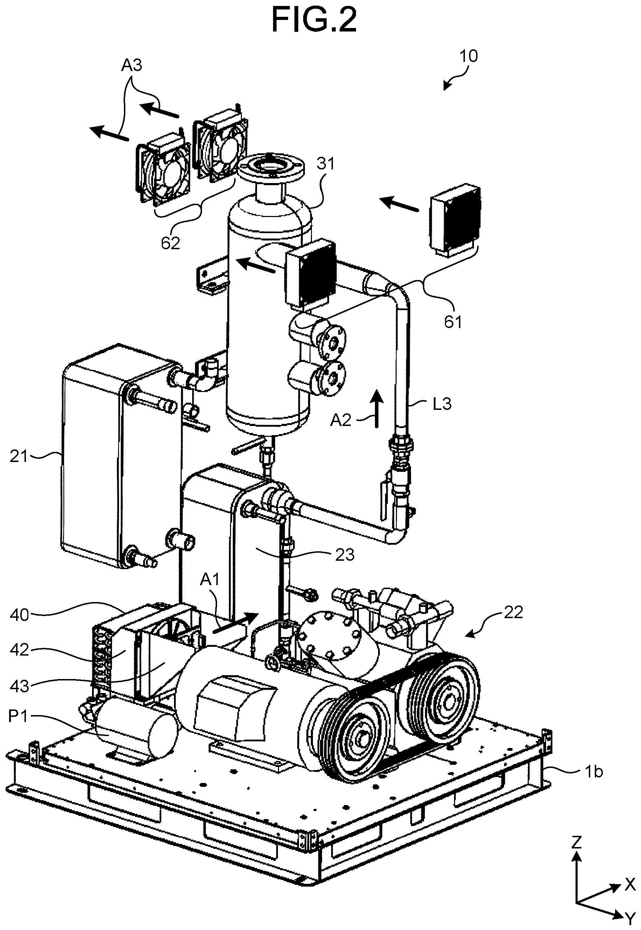

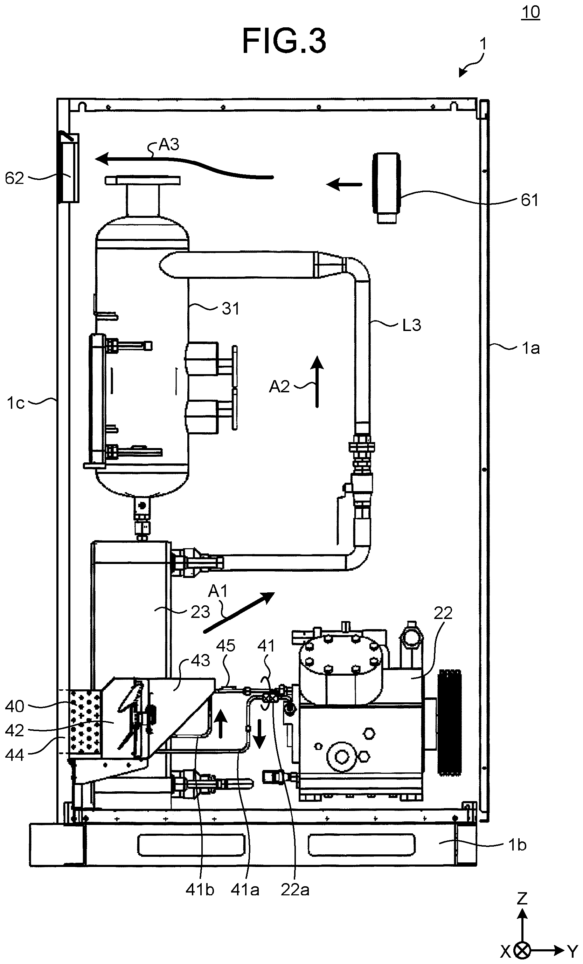

FIG. 2 is a perspective view illustrating a layout configuration of the steam generation heat pump system 10 of FIG. 1. FIG. 3 is a sectional view of the steam generation heat pump system 10 of FIG. 1 when viewed from the left side thereof.

As illustrated in FIG. 2 and FIG. 3, the steam generation heat pump system 10 is disposed inside a system housing 1. The system housing 1 has a front board 1a as a door to open and close the housing. The compressor 22 is disposed on a bottom board 1b, particularly, closer to the front board 1a. The heat-source hot water supply pump P1, the oil heat exchanger 40, and the condenser 23 are disposed closer to a back board 1c, on the bottom board 1b.

The gas-liquid separator 31 is disposed above the condenser 23, closer to the top of the system housing 1. The steam circulation pipe L3 is connected between the condenser 23 and the gas-liquid separator 31. The evaporator 21 is disposed above the oil heat exchanger 40, in the middle of the system housing 1.

The oil heat exchanger 40 intakes in outside air through an intake port 44 disposed closer to the bottom of the back board 1c. The intake fan 42 and an upward-facing hood 43 are sequentially disposed toward the inside of the housing from the oil heat exchanger 40.

Exhaust fans 62 to exhaust air in the system housing 1 outside through an exhaust port are disposed closer to the top of the system housing 1 on the back board 1c. Exhaust fans 61 are disposed closer to the top of the front board 1a to cool electronic devices and other units (not illustrated) disposed inside the front board 1a.

The outside air with heat transferred thereto by the oil heat exchanger 40 is moved in an upward direction A1 toward the steam circulation pipe L3 by the upward-facing hood 43. The air passes nearby the steam circulation pipe L3 along an upward direction A2, then flows along a direction A3 toward the exhaust fans 62, and is discharged outside the system housing 1.

In other words, the oil heat exchanger 40 cools the oil of the compressor 22 and prevents a reduction in the temperature of steam flowing in the steam circulation pipe L3 using heat exchanged in the heat exchange. The exchanged heat is directly used to effectively prevent a reduction in the temperature of steam, which contributes to more efficient steam generation.

An airflow guide plate provided to the upward-facing hood 43 may further facilitate control of the flow.

### Shape of Oil Circulation Pipe

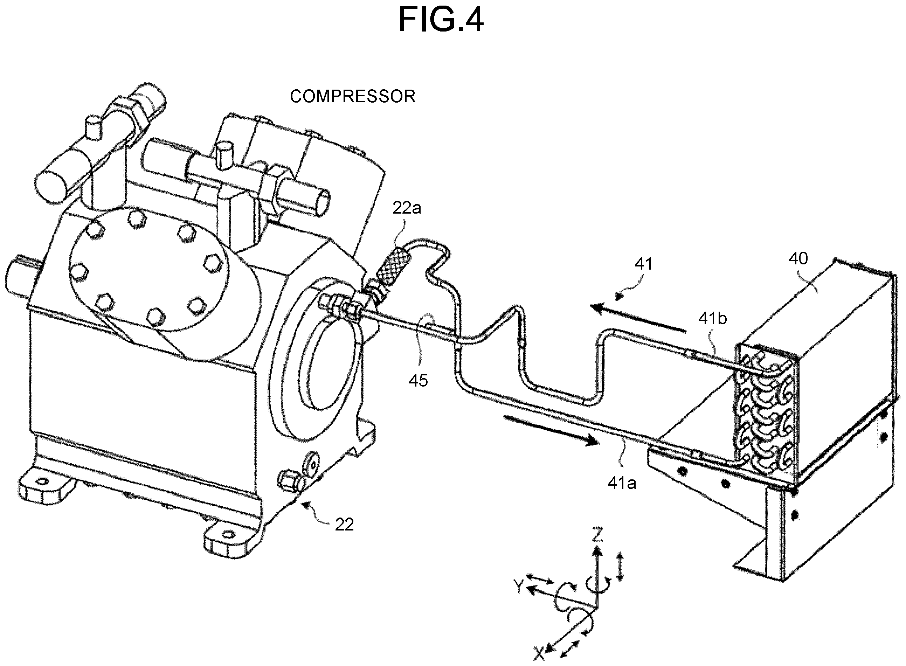

FIG. 4 is a drawing illustrating a shape of the oil circulation pipe 41. As illustrated in FIG. 4, the oil circulation pipe 41 includes an oil pump 22a, an oil feeding pipe 41a, and an oil returning pipe 41b. Oil in the body of the compressor 22 circulates between the body of the compressor 22 and the oil heat exchanger 40. The oil feeding pipe 41a is provided with the oil pump 22a that pumps oil in the body of the compressor 22 to the oil heat exchanger 40 through the oil feeding pipe 41a. Oil circulating through the oil heat exchanger 40 is cooled with heat transferred to the air. The oil pump 22a may be disposed inside the body of the compressor 22.

The oil feeding pipe 41a and the oil returning pipe 41b are extended with some tolerances in six directions, which are the directions in which the x-axis, y-axis, and z-axis are extended and directions of the rotations around the x-axis, y-axis, and z-axis. The oil feeding pipe 41a and the oil returning pipe 41b each are bent at least in the directions of three axes (the x-axis, y-axis, and z-axis) and have U-shaped curved portions.

More specifically, the oil returning pipe 41b is extended in the Y direction from the oil heat exchanger 40, bent in the negative Z direction to form a U-shaped curved portion including the bent portion on the YZ plane, bent in the X direction, and then bent in the Y direction. The curved portion can mitigate the effect of extension and shrinkage of the distance between the oil heat exchanger 40 and the body of the compressor 22. The effect of mitigation is transmitted in three directions of the x-axis, y-axis, and z-axis.

The oil circulation pipe 41 has a relatively small diameter compared to other pipes such as the steam circulation pipe L3. The above shape of the oil circulation pipe 41 is beneficial in reducing the impact of deformation of the pipe and maintaining the strength.

### Layout relationship between Oil Fluid Surface and Oil Heat Exchanger

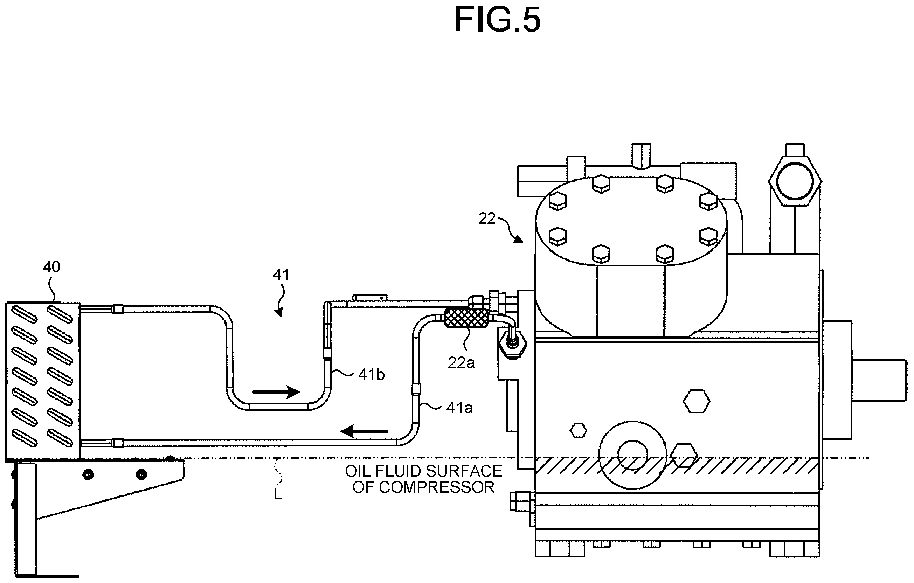

FIG. 5 is a drawing illustrating relative locations between a compressor oil fluid surface of an oil reservoir in the body of the compressor 22 and the oil heat exchanger 40. As illustrated in FIG. 5, the oil heat exchanger 40 is disposed such that the compressor oil fluid surface is located below the lowest level of an oil reserving portion in the oil heat exchanger 40.

This layout is beneficial in preventing shortage of oil in starting of the compressor 22 and thus facilitates starting up of the compressor 22.

### Easy Maintenance of Oil Heat Exchanger

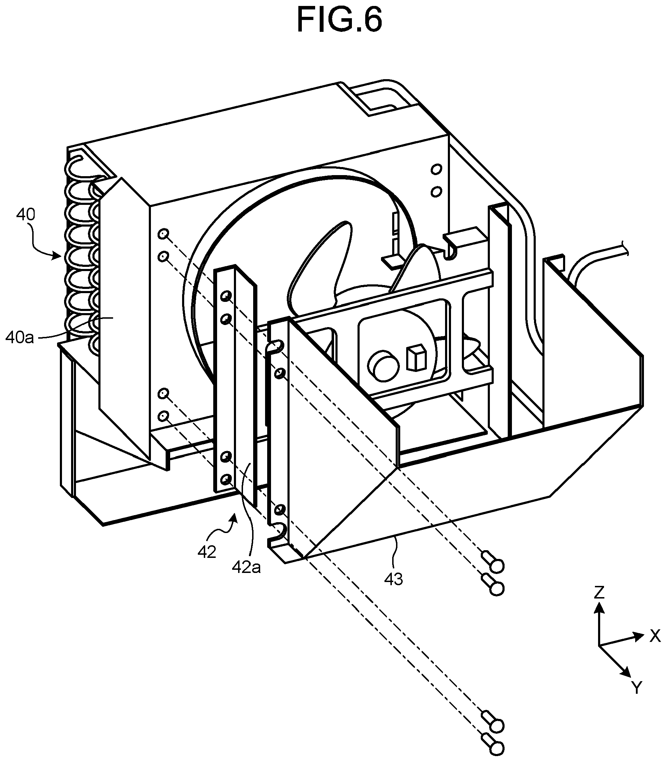

FIG. 6 is an exploded perspective view illustrating relative locations among the oil heat exchanger 40, the intake fan 42, and the upward-facing hood 43 in assembly and disassembly processes. As illustrated in FIG. 6, the intake fan 42 and the upward-facing hood 43 are sequentially connected to the oil heat exchanger 40 with only screws tightened in the Y direction. More specifically, the oil heat exchanger 40, the intake fan 42, and the upward-facing hood 43 are assembled to and disassembled from one another through a guide cover 40a of the oil heat exchanger 40, stays 42a of the intake fan 42, and flanges at both ends of the upward-facing hood 43. In FIG. 6, although the screws are depicted only on a side surface in the negative X direction, the other side surface in the X direction actually has screw connection.

As illustrated in FIG. 2 and FIG. 3, although the oil heat exchanger 40 is disposed closer to the unopenable back board 1c, the screws connected only in the direction of the front board 1a (in the Y direction) make the processes of disassembly and assembly easier.

### Second Embodiment

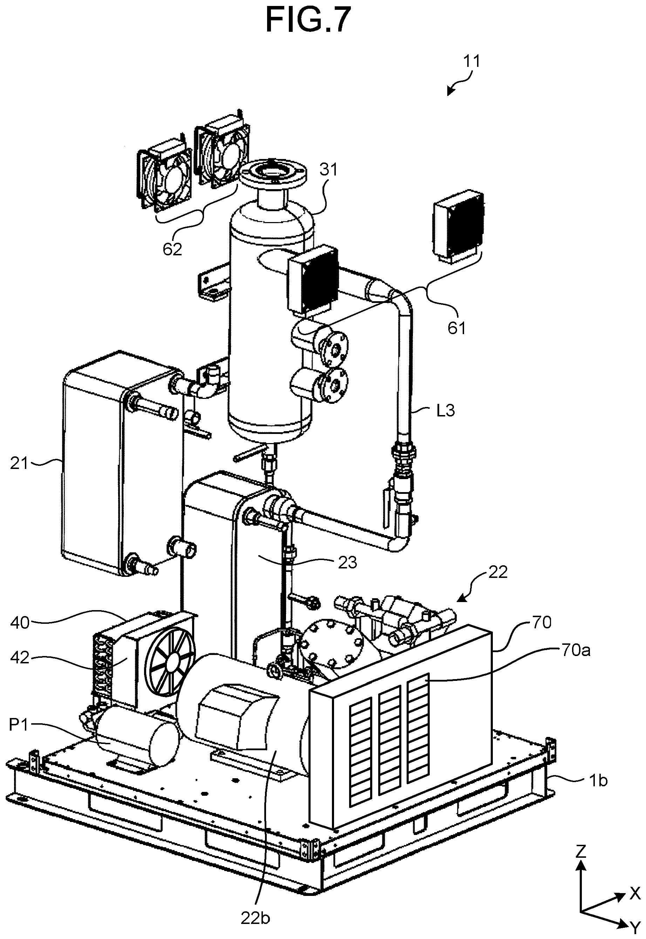

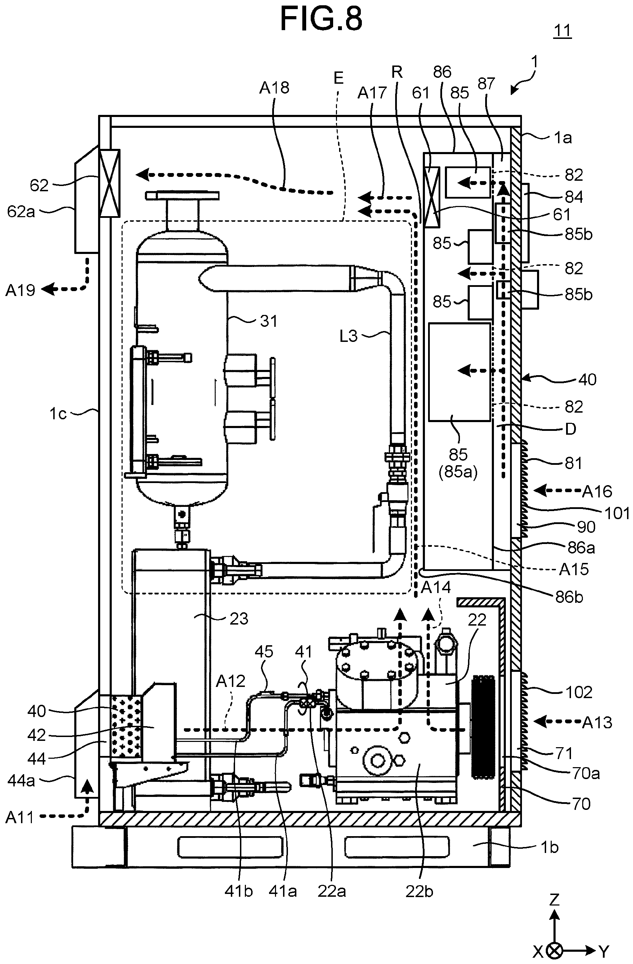

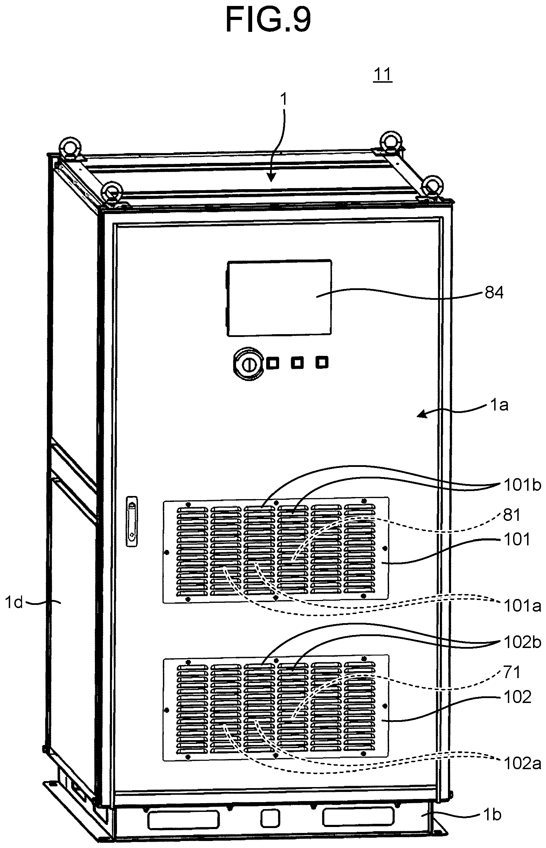

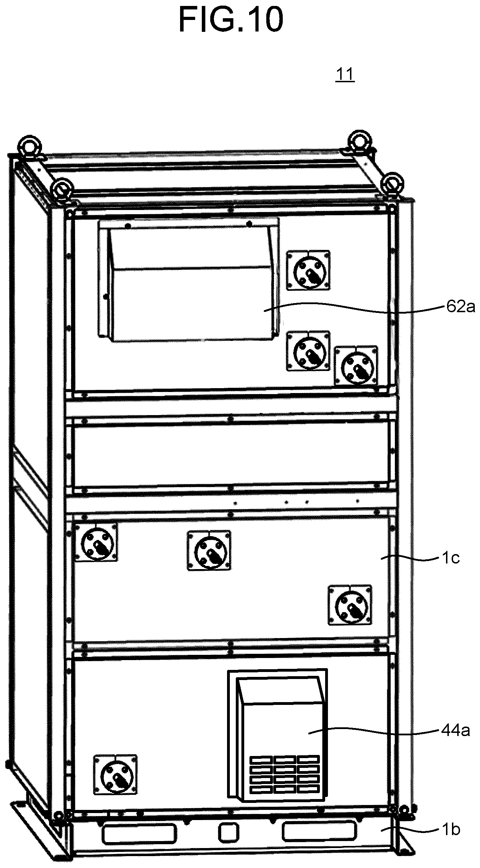

FIG. 7 is a perspective view illustrating a layout configuration of a steam generation heat pump system 11 according to a second embodiment of the present invention. FIG. 8 is a sectional view of the steam generation heat pump system 11 of FIG. 7 when viewed from the left side thereof. FIG. 9 is a perspective view of the steam generation heat pump system 11 of FIG. 7 when viewed diagonally from the front thereof. FIG. 10 is a perspective view of the steam generation heat pump system 11 of FIG. 7 when viewed diagonally from the back thereof.

The steam generation heat pump system 11 according to the second embodiment is different from the steam generation heat pump system 10 according to the first embodiment in that an intake port 71 is provided at a location closer to the bottom of the front board 1a and the location corresponding to a drive motor 22b for driving the compressor 22. A cover member 70 for covering the compressor 22 is provided at a location closer to the front board 1a with respect to the compressor 22, with the intention to ensure safety when the front board 1a is open. The cover member 70 has a plurality of vent holes 70a, each of which is small enough to restrict a finger and a similar object from entering the hole, arranged closer to the drive motor 22b. The vent hole 70a forms an air flow path that allows air flowing in through the intake port 71 to flow toward the drive motor 22b.

The second embodiment uses no upward-facing hoods 43. Accordingly, the outside air with heat exchanged by passing through the intake port 44, the oil heat exchanger 40, and the intake fan 42 therefore flows toward the compressor 22.

An electrical device box 86, having the same configuration as that of the first embodiment, is disposed inside the front board 1a. The configuration and cooling operation of the box will now be described. The front board 1a of the system housing 1 is configured as a door and has an operation panel 84 through which an operator inputs various settings and operation instructions to the controller 50 of the steam generation heat pump system 11. The electrical device box 86, accommodating electrical components 85 of the controller 50, is installed on the inner surface of the front board 1a. The electrical device box 86 is disposed inside the front board 1a, and the electrical components 85 are separated from other apparatuses such as the compressor 22 by a wall surface of the electrical device box 86.

The electrical device box 86 is attached to a frame 87 fixed to the inner surface of the front board 1a. A space (a duct area D) is therefore formed between the electrical device box 86 and the inner surface of the front board 1a. An intake port 81 formed on the front board 1a is open to the duct area D. The electrical device box 86 further has openings 82 to take in outside air supplied to the duct area D through the intake port 81.

The electrical components 85 in the electrical device box 86 are efficiently cooled by the outside air flowing in through the intake port 81. Since the air supplied to the duct area D through the intake port 81 flows into the electrical device box 86 through the openings 82 as appropriate, each of the electrical components 85 vertically arranged inside the electrical device box 86 is allowed to appropriately contact fresh cool air. An electrical component 85a is an inverter. The duct area D, through which air supplied through the intake port 81 and going to flow into the electrical device box 86 passes, is surrounded by the inner surface of the front board 1a, a front wall 86a of the electrical device box 86, and the frame 87. The surrounded duct area D therefore prevents the hot air inside the system housing 1, discharged from the compressor 22 and other units, from entering the electrical device box 86. Furthermore, the duct area D disposed between the electrical device box 86 and the inner surface of the front board 1a can prevent rainwater or the like substance, which could enter the system housing 1 through the intake port 81, from penetrating into the electrical device box 86, because the rainwater or the like is forced to flow through the duct area D.

Air taken in by the exhaust fans 61 enters through the intake port 81 and passes through a filter member 90 and flows into the duct area D. The air flowing into the duct area D moves up in the duct area D. A part of the air flows into the electrical device box 86 through the openings 82 formed on the front wall 86a of the electrical device box 86 and cools the electrical components 85. The remaining part of the air moves up in the duct area D and cools electrical components 85b and is discharged into the system housing 1 through the exhaust fans 61 along with the air flowing into the electrical device box 86. The electrical component 85b has small holes through which air passes the component.

As illustrated in FIG. 9, the intake port 81 is covered by a cover member 101. The cover member 101 is a metal plate having a plurality of cover intake openings 101a that allow air to pass through in the direction of thickness of the plate. The cover member 101 is screwed to the outer surface of the front board 1a. Each cover intake opening 101a is provided with an eaves portion 101b, on the outer surface thereof, sticking out to prevent rainwater or the like from entering the opening. Similarly, the intake port 71 is covered by a cover member 102. The cover member 102 is a metal plate having a plurality of cover intake openings 102a that allow air to pass through in the direction of thickness of the plate. The cover member 102 is screwed to the outer surface of the front board 1a. Each cover intake opening 102a is provided with an eaves portion 102b, on the outer surface thereof, sticking out to prevent rainwater or the like from entering the opening.

As illustrated in FIG. 10, the exhaust fans 62 are provided with an eaves member 62a, on the outer surface thereof, that prevents rainwater or the like from entering the system housing 1 through the exhaust fans 62. Similarly, the intake port 44 is provided with an eaves member 44a, on the outer surface thereof, that prevents rainwater or the like from entering the system housing 1 through the intake port 44.

### Air Flow

As illustrated in FIG. 8, air A11 flowing into the intake port 44 turns to air A12 with heat exchanged by passing through the oil heat exchanger 40 and the intake fan 42. The air A12 then flows toward the compressor 22 and flows directly upward. Air A13 flowing into the intake port 71 passes through the vent holes 70a of the cover member 70 and cools the drive motor 22b. The air A13 turns to air A14 that flows directly upward and then joins the air A12.

Air A15 where the air A12 and the air A14 joined together moves up in the system housing 1 along a back wall 86b of the electrical device box 86. The system housing 1 has a space (uncooled area E) having less circulation of air near the center thereof in the height direction. The uncooled area E includes apparatuses, such as the gas-liquid separator 31 and the steam circulation pipe L3, that need to control heat dissipation and thus need to avoid aggressive cooling down. The air A15 flows along the back wall 86b, more specifically, moves up through an area R formed between the back wall 86b and the uncooled area E. The air A15 therefore has no effect on the warmth retained in the uncooled area E.

Air A16 taken in through the intake port 81 passes through the electrical device box 86, turns to air A17, and is discharged through the exhaust fans 61.

The air A15 joins the air A17 discharged from the electrical device box 86 through the exhaust fans 61, turns to air A18, and moves toward the exhaust fans 62. The air A18 is discharged from the exhaust fans 62 as air A19.

For the configuration having the intake fan 42 and the exhaust fans 61, the exhaust fan 62 needs to have exhaust capacity that enables the pressure inside the system housing 1 to be negative, thereby making sure of air intake through the intake port 71.

In the second embodiment, the drive motor 22b as well as the compressor 22 can be cooled. Furthermore, no effect is exerted on the warmth retained in the uncooled area E.

The intake port 71 may be disposed on a side board 1d, the bottom board 1b, and the back board 1c, particularly, at locations close to the drive motor 22b, instead of being disposed on the front board 1a. The upward-facing hood 43 may be used.

The components described in the embodiments are functionally conceptual, and are not necessarily configured physically as depicted in the drawings. The specific modes of separation and integration of the devices and components are not limited to the modes illustrated therein, and the whole of or a part of the device is allowed to be configured in a functionally or physically dispersed or integrated manner in any unit, based on, for example, various conditions of use.

### Reference Signs List

1 SYSTEM HOUSING
1a FRONT BOARD
1b BOTTOM BOARD
1c BACK BOARD
1d SIDE BOARD
10, 11 STEAM GENERATION HEAT PUMP SYSTEM
20 HEAT PUMP
21 EVAPORATOR
22 COMPRESSOR
22a OIL PUMP
22b DRIVE MOTOR
23 CONDENSER
24 THROTTLE EXPANDER
30 STEAM GENERATOR
31 GAS-LIQUID SEPARATOR
40 OIL HEAT EXCHANGER
40a GUIDE COVER
41 OIL CIRCULATION PIPE
41a OIL FEEDING PIPE
41b OIL RETURNING PIPE
42 INTAKE FAN
42a STAY
43 UPWARD-FACING HOOD
44, 71, 81 INTAKE PORT
44a, 62a EAVES MEMBER
45 TEMPERATURE SENSOR
50 CONTROLLER
51 HEAT PUMP CONTROL UNIT
52 INTAKE FAN CONTROL UNIT
61, 62 EXHAUST FAN
70, 101, 102 COVER MEMBER
70a VENT HOLE
82 OPENING
84 OPERATION PANEL
85, 85a, 85b ELECTRICAL COMPONENT
86 ELECTRICAL DEVICE BOX
86a FRONT WALL
86b BACK WALL
87 FRAME
90 FILTER MEMBER
100 STEAM-USE FACILITY
101a, 102a COVER INTAKE OPENING
101b, 102b EAVES PORTION
A1, A2, A3 DIRECTION
A11 to A19 AIR
D DUCT AREA
E UNCOOLED AREA
L1 HEAT-SOURCE HOT WATER SUPPLY LINE
L2 TO-BE-HEATED WATER SUPPLY LINE
L3, L4 STEAM CIRCULATION LINE (STEAM CIRCULATION PIPE)
L5 STEAM OUTLET LINE
P1 HEAT-SOURCE HOT WATER SUPPLY PUMP
P2 TO-BE-HEATED WATER SUPPLY PUMP
P3 STEAM COMPRESSOR
R AREA

## Claims

1. A steam generation heat pump system that recovers heat from heat-source hot water to refrigerant through an evaporator using a heat pump, compresses the refrigerant with a compressor, generates steam by transferring heat from the compressed refrigerant to water to be heated through a condenser, and supplies generated steam to a steam-use facility, the steam generation heat pump system comprising:
a housing accommodating the steam generation heat pump system;
an intake port disposed, on a side surface of the housing, closer to a bottom of the housing;
an exhaust port disposed, on a side surface of the housing, closer to a top of the housing;
an oil heat exchanger disposed outside a body of the compressor and configured to cool oil of the compressor through an oil circulation pipe connected to the compressor and an oil pump; and
an intake fan provided to the intake port and configured to take in outside air and send the drawn outside air toward the oil heat exchanger.

2. The steam generation heat pump system according to claim 1, further comprising:
a temperature sensor provided to the oil circulation pipe; and
an intake fan control unit configured to control an amount of air sent from the intake fan, wherein
the intake fan control unit increases the amount of air from the intake fan when a temperature detected by the temperature sensor is equal to or greater than a predetermined value.

3. The steam generation heat pump system according to claim 2, wherein the temperature sensor is provided to an oil returning pipe, of the oil circulation pipe, to return oil from the oil heat exchanger to the body of the compressor.

4. The steam generation heat pump system according to any one of claims 1 to 3, wherein each of an oil feeding pipe and the oil returning pipe of the oil circulation pipe is bent at least in directions of three axes and has a U-shaped curved portion.

5. The steam generation heat pump system according to any one of claims 1 to 4, wherein the body of the compressor is disposed such that a fluid surface of an oil reservoir is located below a lowest level of the oil heat exchanger.

6. The steam generation heat pump system according to any one of claims 1 to 5, wherein an upward-facing hood to send air toward a gas-liquid separator is disposed close to an outlet of the intake fan.

7. The steam generation heat pump system according to any one of claims 1 to 6, wherein an intake port is formed on the housing, at a location corresponding to a location of a drive motor that drives the compressor.

## Amended claims

### Amended claims under Art. 19.1 PCT

1. (Amended) A steam generation heat pump system that recovers heat from heat-source hot water to refrigerant through an evaporator using a heat pump, compresses the refrigerant with a compressor, generates steam by transferring heat from the compressed refrigerant to water to be heated through a condenser, and supplies generated steam to a steam-use facility, the steam generation heat pump system comprising:
a housing accommodating the steam generation heat pump system;
an intake port disposed, on a side surface of the housing, closer to a bottom of the housing;
an exhaust port disposed, on a side surface of the housing, closer to a top of the housing;
an oil heat exchanger disposed outside a body of the compressor and configured to cool oil of the compressor through an oil circulation pipe connected to the compressor and an oil pump; and
an intake fan provided to the intake port and configured to take in outside air and send the drawn outside air toward the oil heat exchanger,
wherein an upward-facing hood to send air toward a gas-liquid separator is disposed close to an outlet of the intake fan.

2. The steam generation heat pump system according to claim 1, further comprising:
a temperature sensor provided to the oil circulation pipe; and
an intake fan control unit configured to control an amount of air sent from the intake fan, wherein
the intake fan control unit increases the amount of air from the intake fan when a temperature detected by the temperature sensor is equal to or greater than a predetermined value.

3. The steam generation heat pump system according to claim 2, wherein the temperature sensor is provided to an oil returning pipe, of the oil circulation pipe, to return oil from the oil heat exchanger to the body of the compressor.

4. The steam generation heat pump system according to any one of claims 1 to 3, wherein each of an oil feeding pipe and the oil returning pipe of the oil circulation pipe is bent at least in directions of three axes and has a U-shaped curved portion.

5. (Deleted)

6. (Amended) The steam generation heat pump system according to any one of claims 1 to 4, wherein an upward-facing hood to send air toward a gas-liquid separator is disposed close to an outlet of the intake fan.

7. (Amended) The steam generation heat pump system according to any one of claims 1 to 4 and 6, wherein an intake port is formed on the housing, at a location corresponding to a location of a drive motor that drives the compressor.
